# EUROPEAN PATENT APPLICATION

(11) **EP 1 860 657 A1**
(43) Date of publication of application: **28.11.2007**
(21) Application number: 06728863.9
(22) Date of filing: 09.03.2006
(51) Int. Cl.: G11B 7/24

(54) **OPTICAL DISC**

(30) Priority: 18.03.2005 JP 2005080351
(71) Applicant: FUJIFILM Corporation, Minato-ku Tokyo 106-8620 (JP)
(72) Inventor: KUBO, Hiroshi c/o Fujifilm Corporation, Tokyo 107-0052 (JP)
(74) Representative: Klunker . Schmitt-Nilson . Hirsch
(86) International application number: PCT/JP2006/304646
(87) International publication number: WO 2006/100930

(57) **Abstract**

The invention provides an optical disk including an image recording layer and a first cover layer formed in this order on one surface side of a substrate, and an information recording layer and a second cover layer formed in this order on the other surface side of the substrate. The thicknesses of the first cover layer and the second cover layer are preferably substantially the same as each other. The materials of the first cover layer and the second cover layer are preferably the same material. The materials of the first cover layer and the second cover layer are preferably cellulose triacetate.

## Description

### TECHNICAL FIELD

The invention relates to an optical disk having a label surface (a surface opposite to an information recording surface) at which a visible image can be recorded.

### BACKGROUND ART

Networks such as the Internet and high vision TV have rapidly become popular, and broadcasting of high definition television (HDTV) is being started. Under the circumstances, optical disks of large capacity in which image information can be conveniently recorded at a low cost are demanded. While DVD-R (Digital Versatile Disk) sufficiently plays a role as an optical disk of large capacity at present, demands for larger capacity and higher density have increased more and more, and development of optical recording media capable of coping with such demands is also necessary. Accordingly, optical disks of larger capacity capable of recording at high density by light having a shorter wavelength compared with DVD-R have been under development.

In conventional optical disks, laser beams are usually irradiated from the substrate side. However, for achieving higher density, pickups using short wavelength lasers and objective lenses having high numerical apertures (NA) have increasingly been used. For example, a Blu-ray disk uses a blue-violet laser in the vicinity of 405 nm and an objective lens having an NA of 0.85. In such optical recording media using a short-wavelength and high-NA optical system, the influence of coma aberration caused by the warpage of the disk can be considerable.

Accordingly, for the sake of eliminating the influence of coma aberration, irradiation of a laser beam for recording and reproducing has been performed through a cover layer having a thickness of about 0.1 mm which is far thinner than conventional substrates (for example, that of a CD is 1.2 mm in thickness, and that of a DVD is 0.6 mm in thickness) to attempt to achieve improvement with regard to errors in recording and reproducing caused by coma aberration.

The above-described optical disks, for example rewritable phase change optical recording media, have a medium structure composed of a cover layer, a transparent adhesive layer, a dielectric layer, a recording layer, a dielectric layer, a reflecting layer and a substrate in this order from the laser beam entrance surface side. In a blue-ray disk, the total thickness of the cover layer and the transparent adhesive layer is about 0.1 mm, and the thickness of the substrate is about 1.1 mm. As the cover layer, a plastic film is used.

In such a configuration, the thickness of the substrate is significantly different from that of the cover layer, and thus the disk tends to be warped when used under conditions where environmental temperature significantly changes. It is difficult to reduce the deformability even by variously changing the material of the cover layer.

On the other hand, Blu-ray disks as mentioned above have a large recording capacity and are therefore capable of recording various types of information. Accordingly, it will be convenient if the content of the recorded information can be displayed on the disks. An optical recording medium has been proposed which is capable of displaying by altering the contrast between the surface and background by the use of a laser marker at the label surface (for example, see Patent Document 1). However, this technology is concerned with optical disks such as DVD.
Furthermore, in Patent Documents 2, 3, and 4, optical information recording media capable of forming an image by a laser beam are disclosed.
Patent Document 1: Japanese Patent Application Laid-Open (JP-A) No. 11-66617
Patent Document 2: JP-ANo. 2000-113516
Patent Document 3: JP-ANo. 2001-283464
Patent Document 4: JP-A No. 2000-173096

### DISCLOSURE OF THE INVENTION

### PROBLEMS TO BE SOLVED BY THE INVENTION

The invention has been accomplished in consideration of the above conventional problems, and is intended to achieve the following object. That is, an object of the invention is to provide an optical disk comprising an image recording layer (visible information recording layer) disposed at a label surface, wherein the occurrence of warpage is inhibited.

### MEANS FOR SOLVING THE PROBLEMS

As a result of intensive study for solving the above problems, the inventor has achieved the invention. That is, the invention is an optical disk in which an image recording layer and a first cover layer are formed in this order on one surface side of a substrate, and an information recording layer and a second cover layer are formed in this order on the other surface side of the substrate.

The thicknesses of the first cover layer and the second cover layer are preferably substantially the same as each other. Furthermore, the materials of the first cover layer and the second cover layer are preferably the same material. Furthermore, the materials of the first cover layer and the second cover layer are preferably cellulose triacetate.

### EFFECT OF THE INVENTION

According to the invention, an optical disk comprising an image recording layer (visible information recording layer) disposed at a label surface, wherein the occurrence of warpage is inhibited, can be provided.

### BRIEF DESCRIPTION OF THE DRAWINGS

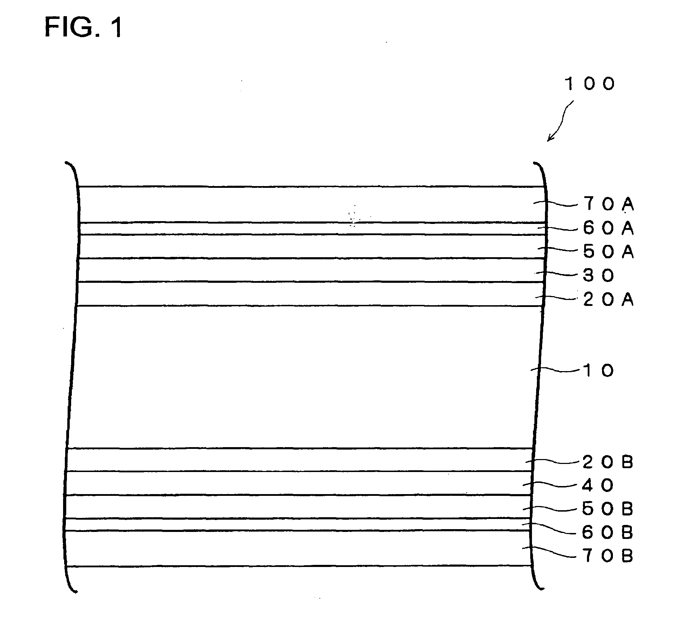

Fig. 1 is a schematic view of main parts representing an example of a configuration of the optical disk of the invention.

### BEST MODE FOR CARRYING OUT THE INVENTION

The optical disk of the invention is further described below. In the optical disk of the invention, an image recording layer and a first cover layer are formed in this order on one surface side of a substrate, and an information recording layer and a second cover layer are formed in this order on the other surface side of the substrate. Since the first cover layer and the second cover layer are provided on both surfaces of the substrate, the warpage which can be a practical problem is not occurred, even when environmental temperature significantly changes. Furthermore, the image recording layer formed on the substrate allows an index display of the information recorded in the optical disk and free formation of intended designs. The optical disk of the invention preferably further has a reflecting layer, a barrier layer, and a protective layer as appropriate.

The optical disk of the invention may be either of a recordable type or of a rewritable type having an information recording layer capable of recording and reproducing information by a laser beam, and is preferably of a recordable type. The information recording system may be of a phase change type or of a dye type, and is not particularly limited, but preferably of a dye type.

In order to effectively inhibit the occurrence of warpage due to the difference of the thickness between the substrate and the cover layer, the thicknesses of the first cover layer and the second cover layer are preferably substantially the same as each other. The term "substantially the same" means that the ratio between the thickness of the first cover layer t₁ and that of the second cover layer t₂ (t₁/t₂) is 0.8 to 1.2, and preferably 0.9 to 1.1.

For the sake of substantially equalizing the thicknesses of the first cover layer and the second cover layer, and more effectively inhibiting the occurrence of warpage, the materials of the layers are preferably the same. The material of the cover layers, which will be further described in detail later, is preferably a transparent sheet comprising polycarbonate or cellulose triacetate, and more preferably a transparent sheet comprising cellulose triacetate in consideration of scratch resistance, birefringence, and cost.

An example of a configuration of the optical disk of the invention a illustrated below by reference to Fig. 1. Fig. 1 is a schematic view representing an example of a configuration of the optical disk of the invention.

As shown in Fig. 1, in the optical disk of the invention 100, a reflecting layer 20A, an information recording layer 30, a barrier layer 50A, an adhesive layer 60A, and a sheet 70A as a first cover layer are formed on one surface side of a substrate 10. Furthermore, a reflecting layer 20B, an image recording layer 40, a barrier layer 50B, an adhesive layer 60B, and a transparent sheet 70B as a second cover layer are formed on the other surface side of the substrate 10. When the first cover layer and the second cover layer are not a sheet or a transparent sheet, the adhesive layer comprising an adhesive or tackiness agent is not indispensable. Furthermore, the sheet 70A may be colored as long as it has a high transmittance with respect to a laser beam.

Each of the layers of the optical disk of the invention may be formed by a known method. Furthermore, the order of formation is not particularly limited. The elements composing the optical disk of the invention (e.g., a substrate and layers) are described below. Each of the layers included in the optical disk of the invention may be composed of a single layer or a plurality of layers.

### [Substrate]

The substrate may be arbitrarily selected from various materials which have been used as substrates for conventional optical disks. Examples of substrate materials include glass, polycarbonate, acrylic resins such as polymethyl methacrylate, vinyl chloride resins such as polyvinyl chloride or vinyl chloride copolymers, epoxy resins, amorphous polyolefin, and polyester. These materials may be used in combination. Among the above-described materials, polycarbonate is preferable from the viewpoint of moisture resistance, dimensional stability, cost, and the like.

In general, the thickness of the substrate is preferably 1.2±0.2 mm, more preferably 1.2±0.1 mm, and in particular, may be appropriately determined in the range of 0.5 to 1.4 mm in consideration of the thickness of the image recording layer, barrier layer, and transparent protective layer, which work for forming a visible image.

Furthermore, a guide groove for tracking or an asperity (groove) representing information such as address signals is formed on at least one surface side of the substrate (a surface side on which an information recording layer is formed). In order to achieve higher storage density, it is preferable to use a substrate having a groove with a track pitch that is narrower than the track pitch in a CD-R or DVD-R. The track pitch of the groove is preferably in the range of 200 to 400 nm, and more preferably in the range of 250 to 350 nm. The depth of the groove (groove depth) is preferably in the range of 20 to 150 nm, and more preferably in the range of 25 to 80 nm. The width of the groove is preferably in the range of 50 to 250 nm, and more preferably in the range of 100 to 200 nm.

A guide groove for tracking may also be formed on the other surface side (a surface side on which an image recording layer is formed) of the substrate. In this case, the guide groove is preferably formed in compliance with the shape of the groove formed on the substrate. When a guide groove is formed on the image recording layer as above, image recording can be performed with a laser pickup being tracked, and the position of the pickup can be precisely controlled, whereby a detailed image can be recorded. Furthermore, the groove provided on the image recording layer iridizes the surface by the effect of interference of light.

Furthermore, an undercoat layer may be provided on one surface side of the substrate for the purposes of improvement of planarity, enhancement of adhesive force, and prevention of degradation of the information recording layer. Examples of the material of the undercoat layer include polymer substances such as polymethyl methacrylate, acrylic acid-methacrylic acid copolymer, styrene-maleic anhydride copolymer, polyvinyl alcohol, N-methylol acrylamide, styrene-vinyl toluene copolymer, chlorosulfonated polyethylene, nitro cellulose, polyvinyl chloride, chlorinated polyolefin, polyester, polyimide, vinyl acetate-vinyl chloride copolymer, ethylene-vinyl acetate copolymer, polyethylene, polypropylene, or polycarbonate; and surface modifiers such as silane coupling agents. The undercoat layer can be formed by dissolving or dispersing the above-described substances in a suitable solvent to prepare a coating liquid, followed by applying the coating liquid onto the surface of a substrate by spin coating, dip coating, extrusion coating, or other coating methods. The thickness of the undercoat layer is generally in the range of 0.005 to 20 µm, and preferably in the range of 0.01 to 10 µm.

### [Reflecting layer]

The reflecting layer is, when it is formed on one surface side, intended for improving the reflectivity in reproduction of information. When the layer is formed on the other surface side, it is intended for improving the visibility of a visible image.

A light reflective substance which is a material of the reflecting layer is preferably a substance having a high reflectivity with respect to a laser beam. Examples thereof include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, or Bi, stainless steel, and semiconductor materials. These substance may be used alone, in combination of two or more of them, or as alloy. Among them, Cr, Ni, Pt, Cu, Ag, Au, Al, and stainless steel are preferable. Au, Ag, Al, or alloys thereof are more preferable, and Ag, Al, or alloys thereof are further preferable, and Ag alloys (Ag-Nd-Cu, Ag-Pd-Cu, Ag-In-Cu, or Ag-Bi-Nd) are most preferable.

The reflecting layer can be formed by, for example, vapor deposition, sputtering, or ion plating of the above-described light reflective substances on the information recording layer or the image recording layer. The thickness of the reflecting layer is generally in the range of 10 to 300 nm, and preferably in the range of 50 to 200 nm.

### [Information recording layer]

The information recording layer is a layer on which code information (encoded information) such as digital information is recorded. Examples thereof include dye type (recordable type) and phase change type ones. The layer is not particularly limited, but preferably of a dye type.

Specific examples of the dye contained in the dye type information recording layer include a cyanine dye, oxonol dye, metal complex dye, azo dye, and phthalocyanine dye. Among them, an oxonol dye is particularly preferable.

Furthermore, dyes described in JP-A Nos. 4-74690, 8-127174, 11-53758, 11-334204, 11-334205, 11-334206, 11-334207, 2000-43423, 2000-108513, 2000-158818 and others are preferably used.

Furthermore, in the dye type information recording layer, organic compounds such as a triazole compound, triazine compound, cyanine compound, melocyanine compound, amino butadiene compound, phthalocyanine compound, cinnamic acid compound, viologen compound, azo compound, oxonol benzoxazole compound, and benzotriazole compound are preferably used. Among these compounds, a cyanine compound, amino butadiene compound, benzotriazole compound, phthalocyanine compound, and oxonol compound are particularly preferable.

The dye type information recording layer can be formed by vapor deposition, sputtering, CVD, solvent coating, or other methods, and is preferably formed by solvent coating.

When a solvent coating method is employed, the dye type information recording layer is formed by dissolving a recording substance such as a dye in a solvent together with a quencher, binder, or the like to prepare a coating liquid, subsequently applying the coating liquid onto a substrate to form a coated film, followed by drying. The concentration of the recording substance (dye) in the coating liquid is generally in the range of 0.01 to 15% by mass, preferably in the range of 0.1 to 10% by mass, more preferably in the range of 0.5 to 5% by mass, and most preferably in the range of 0.5 to 3% by mass.

Examples of the solvent for the coating liquid include esters such as butyl acetate, ethyl lactate, or cellosolve acetate; ketones such as methyl ethyl ketone, cyclohexanone, or methyl isobutyl ketone; chlorinated hydrocarbons such as dichloro methane, 1,2-dichloro ethane, or chloroform; amides such as dimethylformamide; hydrocarbons such as methyl cyclohexane; ethers such as dibutyl ether, diethyl ether, tetrahydrofuran, or dioxane; alcohols such as ethanol, N-propanol, isopropanol, n-butanol, or diacetone alcohol; fluorine solvents such as 2,2,3,3-tetrafluoropropanol; and glycol ethers such as ethylene glycol monomethyl ether, ethylene glycol monoethyl ether, or propylene glycol monomethyl ether.

The above-described solvents may be used alone or in combination of two or more in consideration of the solubility of the dye to be used. To the coating liquid, various additives such as an antioxidant, UV absorbing agent, plasticizing agent, or lubricant may be further added according to the intended use.

When a binder is used, examples thereof include natural organic polymer substances such as gelatin, cellulose derivatives, dextran, rosin, and rubber; and synthesis organic polymers such as: hydrocarbon resins such as polyethylene, polypropylene, polystyrene, or polyisobutylene; vinyl resins such as polyvinyl chloride, polyvinylidene chloride, or polyvinyl chloride-polyvinyl acetate copolymer; acrylic resins such as polymethyl acrylate or polymethyl methacrylate; and initial condensates of thermosetting resins such as polyvinyl alcohol, chlorinated polyethylene, epoxy resin, butyral resin, rubber derivatives, or phenol-formaldehyde resin.

When a binder is included in the materials of the dye type information recording layer, the usage amount of the binder is generally in the range of 0.01 to 50 times the mass of the dye, and preferably in the range of 0. 1 to 5 times the mass of the dye.

Examples of the coating method for the above-described solvent coating include a spray method, spin coat method, dip method, roll coat method, blade coat method, doctor roll method, and screen printing method.

The thickness of the dye type information recording layer is generally in the range of 10 to 500 nm, preferably in the range of 15 to 300 nm, and more preferably in the range of 20 to 150 nm. The dye type information recording layer may be composed of a single layer or a plurality of layers.

The dye type information recording layer may contain various antifading agents in order to improve the light resistance thereof As the antifading agent, a singlet oxygen quencher is generally used. As the singlet oxygen quencher, known ones described in publications such as patent descriptions may be used. Specific examples thereof include those described in JP-ANos. 58-175693, 59-31194, 60-18387, 60-19586, 60-19587, 60-35054, 60-36190, 60-36191, 60-44554, 60-44555, 60-44389, 60-44390, 60-54892, 60-47069, 68-209995, and 4-25492, Japanese Patent Application Publication (JP-B) Nos. 1-38680, and 6-26028, German Patent No. 350399, and Nihon Kagaku Kaishi (Journal of the Chemical Society of Japan), October 1992, p. 1141.

The usage amount of the above-described antifading agent such as a singlet oxygen quencher is usually in the range of 0.1 to 50% by mass relative to the mass of the dye, preferably in the range of 0.5 to 45% by mass, further preferably in the range of 3 to 40% by mass, and particularly preferably in the range of 5 to 25% by mass.

Furthermore, specific examples of the materials composing the phase change type information recording layer include a Sb-Te alloy, Ge-Sb-Te alloy, Pd-Ge-Sb-Te alloy, Nb-Ge-Sb-Te alloy, Pd-Nb-Ge-Sb-Te alloy, Pt-Ge-Sb-Te alloy, Co-Ge-Sb-Te alloy, In-Sb-Te. alloy, Ag-In-Sb-Te alloy, Ag-V-In-Sb-Te alloy, and Ag-Ge-ln-Sb-Te alloy. Among them, a Ge-Sb-Te alloy and Ag-ln-Sb-Te alloy are preferable because they allow multiple times of rewriting.

The thickness of the phase change type information recording layer is preferably 10 to 50 nm, and more preferably 15 to 30 nm. The phase change type information recording layer can be formed by a vapor phase thin film deposition method such as a sputtering method or vacuum deposition method.

### [Barrier layer]

The barrier layer is preferably provided primarily for the purpose of preventing the deterioration of dyes in the information recording layer, and further for enhancing the storage stability of the image recording layer.

The material used for the barrier layer is not particularly limited as long as it is a material which transmits a laser beam for image recording-to the image recording layer, and is capable of carrying out the above-described functions. For example, it is a material having a low gas or moisture permeability, and preferably a dielectric, material. The barrier layer preferably has a transmittance of 80% or more, more preferably 90% or more, and further preferably 95% or more with respect to a laser beam for recording an image on the image recording layer.

Specifically, as the material used for the barrier layer, materials composed of nitrides, oxides, carbides, or sulfides of Zn, Si, Ti, Te, Sn, Mn, Ge, or the like are preferable, ZnS, MoO₂, GeO₂ TeO, SiO₂, TiO₂, ZuO, ZnS-SiO₂, SnO₂, and ZnO-Ga₂O₃ are preferable, and ZnS-SiO₂, SnO₂, and ZnO-Ga₂O₃ are more preferable.

The barrier layer can be formed on the recording layer by a vacuum film forming method such as vacuum deposition, DC sputtering, RF sputtering, or ion plating. The film forming conditions in these vacuum film forming methods may be appropriately adjusted according to the material and the intended thickness and density of the film to be formed. The thickness of the barrier layer is preferably in the range of 1 to 200 nm, more preferably in the range of 2 to 100 nm, and further preferably in the range of 3 to 70nm.

### [Protective layer]

The protective layer is an optional layer which is provided for the purpose of physically and chemically protecting the information recording layer and/or the image recording layer.

Examples of the material used for the protective layer include inorganic substances such as ZnS, ZnS-SiO₂, SiO, SiO₂, MgF₂, SnO₂, or Si₃N₄, and organic substances such as thermoplastic resins, thermosetting resins, or UV curable resins.

When the protective layer is formed using a thermoplastic resin or thermosetting resin, the layer may also be formed by dissolving the resin in an appropriate solvent to prepare a coating liquid, followed by applying and drying the coating liquid. In cases where a UV curable resin is used, the protective layer may be formed by applying the coating liquid, followed by irradiating UV light for curing. To the coating liquid, various additives such as an anti-static agent, antioxidant, or UV absorbing agent may be further added according to the purpose. The thickness of the protective layer is generally in the range of 0.1 µm to 1 mm.

### [Image recording layer]

On the image recording layer, visible images (visible information) such as characters, graphics, pictures or the like intended by the user are recorded by a laser beam. Examples of the visible image include the title and content information of the disk, thumbnail of the content, related pictures, designed pictures, copyright information, date and time of recording, recording method, recording format, and bar code.

The visible image recorded on the image recording layer means a visually recognizable image, and includes all types of visually recognizable information such as a character (string), picture, or graphics. Furthermore, examples of character information include authorized user designation information, period of use designation information, times of use designation information, rental information, resolution designation information, layer designation information, user designation information, copyright owner information, copyright number information, manufacturer information, information on date of manufacture, information on date of sale, information on sale shops or sellers, information on used set numbers, region designation information, language designation information, application designation information, product user information, and information on numbers in use.

The image recording layer suffices if it is capable of recording image information such as a character, image, or picture by irradiation of a laser beam in a visually recognizable manner. As the constituent material thereof, the recording substance (e.g., dye or phase change recording material) described with regard to the previously-mentioned information recording layer can be preferably used, and the layer preferably contains a dye from the viewpoint of visibility.

Furthermore, in the optical disk of the invention, the constituent of the previously-described information recording layer (recording substance: dye or phase change recording material) and the constituent of the image recording layer may be the same as or different from each other, but preferably different from each other because the required properties differ between the information recording layer and the image recording layer. Specifically, the constituent of the information recording layer is preferably superior in recording and reproducing properties, and the constituent of the image recording layer preferably increases the contrast of the recorded visible image.

In particular, when a dye is used as the constituent of the image recording layer, among the previously-described dyes, a cyanine dye, phthalocyanine dye, azo dye, azo metal complex, oxonol dye, and leuco dye are preferable from the viewpoint of improving the contrast of the recording image. Furthermore, one of the information recording layer or the image recording layer may be of a phase change type, and the other may be of a dye type. In this case, it is preferable that the information recording layer is of a phase change type, and the image recording layer is of a dye type.

The image recording layer can be formed by dissolving a previously-described dye in a solvent to prepare a coating liquid, followed by applying the coating liquid. As the solvent, the same solvent as that used for the preparation of the previously-described coating liquid for the information recording layer may be used. Other additives, coating method, and the like may follow those for the previously-described information recording layer.

The thickness of the image recording layer is preferably in the range of 0.01 to 200 µm, more preferably in the range of 0.05 to 20 µm, and further preferably in the range of 0.1 to 5 µm.

### [Adhesive layer]

The adhesive layer in the optical disk of the invention is formed when a transparent sheet is used as a first cover layer and/or a second cover layer.

When an adhesive is used as the adhesive layer, for example, a UV curable resin, EB curable resin, thermosetting resin, or the like is preferably used, and in particular a UV curable resin is preferably used. Furthermore, in order to prevent the warpage of the optical disk, the UV curable resin constituting the adhesive layer preferably has a low cure shrinkage. Examples of such UV curable resins include SD-640 manufactured by Dainippon Ink And Chemicals, Incorporated.

These adhesives are applied at least one surface to be bonded by roll coating, spin coating, screen printing, or other methods. Then the adhesive is cured to form an adhesive layer. The thickness of the formed adhesive layer is preferably in the range of 10 to 100 µm, and more preferably in the range of 20 to 60 µm from the viewpoints of development of adhesive strength and leveling effect.

Furthermore, a transparent sheet coated with a tackiness agent may be used, that is, a tackiness agent may be used as the adhesive layer in place of the above-described adhesive. As the tackiness agent, acryl, rubber, and silicon tackiness agents may be used, and acryl tackiness agents are preferable from the viewpoint of transparency and durability. The acryl tackiness agent is preferably a copolymer in which 2-ethylhexyl acrylate, n-butyl acrylate, or the like as a main ingredient is polymerized with a short-chain alkyl acrylate or methacrylate for enhancing cohesive force, such as methyl acrylate, ethyl acrylate, or methyl methacrylate, and acrylic acid, methacrylic acid, an acrylamide derivative, maleic acid, hydroxyl ethyl acrylate, glycidyl acrylate, or the like which can serve as crosslinking point with a crosslinking agent. The glass transition temperature (Tg) and crosslinking density can be varied by appropriately adjusting the type and mixing ratio between the main ingredient, the short chain component, and the component for imparting a crosslinking point.

Examples of the crosslinking agent used in combination with the above-described tackiness agent include isocyanate crosslinking agents. Examples of the isocyanate crosslinking agents include isocyanates such as tolylene diisocyanate, 4,4'-diphenylmethane diisocyanate, hexamethylene diisocyanate, xylylene diisocyanate, naphthylene-1,5-diisocyanate, o-toluidine isocyanate, isophorone diisocyanate, or triphenyl methane triisocyanate, reaction products of these isocyanates and polyalcohols, and polyisocyanates produced by the condensation of isocyanates. Examples of commercial products of the above isocyanates include COLONATE L, COLONATE HL, COLONATE 2030, COLONATE 2031, MILLIONATE MR, and MILLIONATE HTL manufactured by Nippon Polyurethane Industry Co., Ltd.; TAKENATE D-102, TAKENATE D-110N, TAKENATE D-200, and TAKENATE D-202 manufactured by Takeda Pharmaceutical Company Limited; and DESMODUR L, DESMODUR IL, DESMODUR N, and DESMODUR HL manufactured by Sumitomo Bayer Co., Ltd.

### [Cover layer]

The first cover layer and the second cover layer are formed, as previously mentioned, for preventing the warpage of the optical disk. Furthermore, they also physically and chemically protect the inside of the optical disk. The cover layers are transparent for irradiating a laser beam to the information recording layer and the image recording layer. More specifically, the layers preferably have a transmittance of 80% or more, more preferably 90% or more, and further preferably 95% or more with respect to both of a laser beam and reflected light.

As the transparent sheet (sheet) as a cover layer, as previously described, specifically, polycarbonate, acrylic resins such as polymethyl methacrylate; vinyl chloride resins such as polyvinyl chloride, or vinyl chloride copolymers; epoxy resin; amorphous polyolefin; polyester; cellulose triacetate, and the like are preferable, and among them, polycarbonate or cellulose triacetate is more preferable, and cellulose triacetate is further preferable.

The thickness of the transparent sheet, which is appropriately selected according to the laser beam for image recording and NA, in the invention, is preferably in the range of 10 to 600 µm, more preferably in the range of 30 to 200 µm, and further preferably in the range of 50 to 110 µm.

When an adhesive is used as the adhesive layer, for example, "a specified amount of adhesive is applied onto a barrier layer at the surface to be bonded, and thereon a transparent sheet is placed", or "a specified amount of adhesive is applied onto a transparent sheet, and the coated surface is fitted to a barrier layer at the surface to be bonded", and subsequently the adhesive is uniformly spread between the surface to be bonded and the transparent sheet by spin coating, and cured using a curing means suitable to the adhesive (for example, UV irradiation) to form a cover layer comprising a transparent sheet. When the adhesive is a UV curable resin, it may be cured by UV irradiation for bonding.

As the adhesive to be applied, the above-described curable resins may be used as they are, or a coating liquid prepared by dissolving the above-described curable resin in an appropriate solvent such as methyl ethyl ketone or ethyl acetate may be used.

Furthermore, when a tackiness agent is used as the adhesive layer, a cover layer is formed by, for example, uniformly applying a specified amount of tackiness agent onto the barrier layer at the surface to be bonded, and thereon placing a transparent sheet, followed by curing, or by uniformly applying a specified amount of tackiness agent onto one surface of a transparent sheet to form a coating film of the tackiness agent, and pressing the coating film against the surface to be bonded by a vacuum adhesion system or rubber roller for bonding, followed by curing. As a transparent sheet, a tacky film on which a tacky layer has been previously provided may be used.

Other embodiments of the cover layers include a transparent curable resin layer. As the material for the transparent curable resin layer, UV curable resins, EB curable resins, and thermosetting resins, which are suitable as the adhesive used for the above-described adhesive layer, may be used, and among them, UV curable resins are preferably used. Furthermore, for the sake of effectively preventing the warpage of the optical disk, the UV curable resin for constituting the adhesive layer preferably has a low cure shrinkage. Examples of such UV curable resins include SD-640, a UV curable resin manufactured by Dainippon Ink And Chemicals, Incorporated.

In such cases, the thickness of the cover layers may be specified according to the layer configuration of the optical disk, and preferably in the range of 10 to 600 µm, more preferably in the range of 30 to 200 µm, and further preferably in the range of 50 to 110 µm from the viewpoints of the ability of protecting the inside of the optical disk and transparency.

A hard coat layer may be provided on at least either one of the laser beam incident surfaces of the cover layers in the invention for preventing scratches on the laser beam incident surfaces during manufacturing or using the optical disk.

### (Image recording method)

Image recording on the image recording layer of the optical disk of the invention is performed using the optical disk of the invention and a recording apparatus at least capable of recording image information on the image recording layer of the optical disk.
In the first place, the recording apparatus used for recording in the optical disk of the invention is further described below.

In the optical disk of the invention, recording of an image on the image recording layer, and recording of optical information on the information recording layer can be performed by one optical disk drive (recording apparatus) having recording functions for both the layers. When such an optical disk drive is used, recording is performed on either one of the image recording layer or the information recording layer, then the disk is turned upside down, followed by recording on the other layer. Alternatively, by changing the focus position between the information recording layer and the image recording layer from the surface at the information recording layer side, recording can be carried out on either one of the image recording layer or the information recording layer, and immediately after that, recording can be carried out on the other layer. In this case, there is no need to turn the disk upside down.

The optical disk drive having a function of recording of a visible image on the image recording layer is, for example, described in JP-A Nos. 2003-203348 and 2003-242750.

The recording apparatus for recording optical information on the information recording layer and recording a visible image on the image recording layer comprises at least a laser pickup for irradiating a laser beam, a rotating device for rotating the optical disk, and a transfer device for changing the relative position of the pickup to the disk in the radial direction. The objective lens and laser used for the pickup may be known ones according to the optical disk in which an image is recorded.

The method of recording a visible image on the image recording layer using the recording apparatus is further described below. In the first place, the laser pickup is focused to the image recording layer of the optical disk being rotated by the rotating device, and subsequently the pickup is allowed to track the formed groove for tracking and to relatively move along the surface of the optical disk, and a laser beam (for example 780 nm) modulated according to the image data such as a character or picture to be formed is irradiated from the second cover layer side toward the image recording layer while synchronized with the relative movement, whereby a visible image is recorded. Such a configuration is described in, for example, JP-A Nb. 2002-203321.

Recording of a visible image on the image recording layer does not necessarily require tracking. In such cases, for example, a method of recording a visible image by laser irradiation controlled by a stepping motor or the like according to intended image data is used.

### (Information recording method)

In the next place, recording of information (digital information) on the information recording layer using the recording apparatus is further described. When the information recording layer is of a dye type, a laser beam (350 to 500 nm, preferably 400 to 440 nm) is irradiated by the laser pickup from the first cover layer side while the above-described unrecorded optical disk is rotated by the rotating device at a predetermined recording linear velocity. The irradiated beam is absorbed by the dye in the information recording layer to locally increase the temperature, and intended pits are generated to change the optical properties in the region, whereby information is recorded. The information recorded on the information recording layer is reproduced by laser irradiation from the laser pickup toward the information recording layer of the optical disk in a rotated state.

Examples of the laser beam source irradiating an oscillation wavelength of 350 to 500 nm include a blue-violet semiconductor laser having an oscillation wavelength in the range of 390 to 415 nm, and a blue-violet SHG laser having a center oscillation wavelength of about 430 nm. Furthermore, the numerical aperture (NA) of the objective lens used for the pickup is preferably 0.7or more, and more preferably 0.80 or more for enhancing the recording density.

In the next place, the phase change type information recording layer is further described. The phase change type information recording layer is composed of the above-described materials, and is capable of repeating phase change between a crystal phase and amorphous phase by laser beam irradiation. When information is recorded, concentrated laser beam pulses are irradiated for a short period of time to partially melt the phase change type information recording layer. The melted portion is rapidly cooled by thermal diffusion, solidifies, and forms recording marks in an amorphous state. When information is erased, a laser beam is irradiated to the recording marks to heat the portion to a temperature equal to or lower than the melting point of the information recording layer but equal to or higher than the crystallization temperature, and then the portion is slowly cooled to crystallize the amorphous state recording marks to return to the original unrecorded state.

### EXAMPLES

The invention is illustrated by following Examples, but the invention is not limited to them.

### (Example 1)

Ag was sputtered on a substrate having a thickness of 1.0 mm and a diameter of 120 mm and composed of an injection molded polycarbonate resin (trade name: PANLITE AD5503, polycarbonate manufactured by Teijin Chemicals Ltd.) having a spiral groove (depth:40 nm, width: 120 nm, track pitch: 320 nm) at a side having a groove to form a reflecting layer having a thickness of 70 nm.

12 g of dye A (ORASOL-BLUE GN: manufactured by Ciba Specialty Chemicals, maximum absorption: 340 nm, 640 nm), which is a phthalocyanine organic compound, was mixed with 1 L of 2,2,3,3-tetrafluoropropanol and dissolved therein by ultrasonic treatment for 2 hours, whereby a coating liquid for forming a recording layer was prepared. Using the coating liquid, an information recording layer having a thickness of 70 nm was formed on the reflecting layer by a spin coat method.

Furthermore, Ag was sputtered on the substrate at a side having no information recording layer to form a reflecting layer having a thickness of 70 nm.

Onto the reflecting layer formed as described above, a coating liquid, which had been prepared by mixing 12 g of dye A (ORASOL-BLUE GN: manufactured by Ciba Specialty Chemicals, maximum absorption: 340 nm, 640 nm) with 1 L of 2,2,3,3-tetrafluoropropanol, and dissolving therein by ultrasonic treatment for 2 hours, was applied by a spin coat method to form an image recording layer. Subsequently, the layer was heated and dried in a clean oven at 80°C for 30 minutes. The thickness of the image recording layer was 100 nm. Subsequently, a barrier layer having a thickness of 7 nm was formed using a target composed of 7 parts by mass of ZnO and 3 parts by mass of Ga₂O₃ on each side by a sputtering method.

Polycarbonate films having a thickness of 80 µm coated with a tackiness agent (first and second cover layers) were respectively bonded on the barrier layers, whereby an optical disk was prepared. The thickness of the adhesive layer of the tackiness agent after bonding was 20 µm.

### (Example 2)

An optical disk was prepared in the same manner as Example 1, except that as the first cover layer and the second cover layer, cellulose triacetate films (trade name: FUJITACK, manufactured by Fuji Photo Film Co., Ltd., thickness: 80 µm) were used in place of the polycarbonate films.

### (Comparative Example)

An optical disk was prepared in the same manner as Example 1, except that no reflecting layer, no image recording layer, no barrier layer, and no cover layer was formed on the other surface side of the substrate, and the thickness of the substrate was 1.1 mm.

The optical disks of Examples 1 and 2, and Comparative Example were stored at 80°C, 85%RH, for 96 hours and observed for the changes by the environmental temperature. The optical disks of Examples 1 and 2 scarcely warped, but the optical disk of Comparative Example warped which gave a practical problem.

Furthermore, with respect to the optical disks of Examples 1 and 2, the pencil hardness of the cover layers on both the sides were measured. As a result, the optical disk of Example 2 using a cellulose triacetate film had a pencil hardness of HB, and that of the optical disk of Example 1 was 4B. That is, it was confirmed that the optical disk of Example 2 had high hardness and excellent scratch resistance.

### EXPLANATION OF REFERENCE NUMERALS

10 : substrate
20A, 20B : reflecting layer
30 : information recording layer
40 : image recording layer
50A, 50B: barrier layer
60A, 60B : adhesive layer
70A, 70B : (transparent) sheet
100 : optical disk

## Claims

1. An optical disk comprising an image recording layer and a first cover layer formed in this order on one surface side of a substrate, and an information recording layer and a second cover layer formed in this order on the other surface side of the substrate.

2. The optical disk of Claim 1, wherein the thicknesses of the first cover layer and the second cover layer are substantially the same as each other.

3. The optical disk of Claim 1 or 2, wherein the materials of the first cover layer and the second cover layer are the same material.

4. The optical disk of Claim 3, wherein the materials of the first cover layer and the second cover layer are cellulose triacetate.

5. The optical disk of Claim 2, wherein each of the thicknesses of the first cover layer and the second cover layer is 10 to 600 µm.

6. The optical disk of Claim 1, wherein the thickness of the substrate is 0.5 to 1.4 mm.

7. The optical disk of Claim 1, wherein the substrate comprises polycarbonate.

8. The optical disk of Claim 1, wherein a barrier layer is further formed between the image recording layer and the first cover layer and/or between the information recording layer and the second cover layer.

9. The optical disk of Claim 1, wherein the image recording layer and/or the information recording layer comprises a dye.

10. The optical disk of Claim 9, wherein the image recording layer and/or the information recording layer contains an oxonol dye.
